(19) Europäisches Patentamt
European Patent Office
Office européen des brevets

(11) **EP 3 112 919 B1**

(12) **EUROPÄISCHE PATENTSCHRIFT**

(45) Veröffentlichungstag und Bekanntmachung des Hinweises auf die Patenterteilung:
**20.04.2022  Patentblatt 2022/16**

(21) Anmeldenummer: **16168756.1**

(22) Anmeldetag: **09.05.2016**

(51) Internationale Patentklassifikation (IPC):
**G02B 21/24** *(2006.01)*

(52) Gemeinsame Patentklassifikation (CPC):
**G02B 21/245; G02B 21/241**

(54) **MIKROSKOP MIT EINEM OPTIKMODUL, DAS MINDESTENS EIN OPTISCHES ELEMENT AUFWEIST**

MICROSCOPE HAVING AN OPTICAL MODULE WITH AT LEAST ONE OPTICAL ELEMENT

MICROSCOPE COMPRENANT UN MODULE OPTIQUE, PRESENTANT AU MOINS UN ELEMENT OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.07.2015  DE 102015110795**

(43) Veröffentlichungstag der Anmeldung:
**04.01.2017  Patentblatt 2017/01**

(73) Patentinhaber: **Carl Zeiss Microscopy GmbH 07745 Jena (DE)**

(72) Erfinder:
• **LEIDENBACH, Steffen 37130 Gleichen (DE)**
• **STEINBORN, Stefan 37120 Bovenden (DE)**
• **WINDOLPH, Christoph 37075 Göttingen (DE)**

(74) Vertreter: **Patentanwälte Geyer, Fehners & Partner mbB Perhamerstrasse 31 80687 München (DE)**

(56) Entgegenhaltungen:
**DE-A1- 10 249 177       DE-A1- 10 349 419
DE-A1- 19 839 777       DE-A1-102005 039 949
US-A1- 2010 060 777**

**Beschreibung**

Die vorliegende Erfindung betrifft ein Mikroskop mit einem Optikmodul, das mindestens ein optisches Element aufweist.

Bei der Entwicklung solcher Mikroskope steht man immer wieder vor der Herausforderung, das es Subsysteme gibt, die im Gesamtsystem komplexe Abläufe erfüllen sollen, von denen das Gesamtsystem aber erst einmal nicht exakt weiß, wie die Abläufe im Subsystem auszuführen sind.

Man kann das Gesamtsystem während der Entwicklung mit dem vollständigen Wissen über die Fähigkeiten und die Benutzung des Subsystems ausstatten. Nachteilig ist hierbei, dass bei jeder entwicklungsbedingten Änderung der Eigenschaften des Subsystems auch das Gesamtsystem überarbeitet werden muss, um die neuen Eigenschaften anwenden zu können.

Ferner ist es möglich, das Subsystem vollständig mit Rechentechnik auszustatten, so dass es autark seine Abläufe im Gesamtsystem erfüllen kann. Das Gesamtsystem müsste dann über geeignete Kommandos im entsprechenden Moment die Ausführung der Subsystem-Abläufe anstoßen. Nachteilig ist hierbei, dass die Entwicklung des Subsystems deutlich komplexer wird. Es muss eine entsprechende Rechentechnik eingebaut werden, eine Kommandostruktur muss entwickelt werden, um mit der Außenwelt kommunizieren zu können, und es muss sowohl das Subsystem als auch das Gesamtsystem und die zugehörigen Kommandos überarbeitet werden, wenn neue oder geänderte Funktionalitäten des Subsystems entwickelt werden sollen.

Ausgehend hiervon ist es daher Aufgabe der Erfindung, ein Mikroskop mit einem Optikmodul, das mindestens ein optisches Element und ein Submodul aufweist, so weiterzubilden, dass die eingangs beschriebenen Schwierigkeiten möglichst vollständig behoben sind.

Die DE 103 49 419 A1 beschreibt ein Mikroskop mit den Merkmalen des Oberbegriffs des Anspruches 1. Die DE 102 49 177 A1 beschreibt ein Mikroskop mit mehreren Funktionseinheiten, die untereinander über ein Bus-System kommunizieren. Die DE 198 39 777 A1 beschreibt ein elektrisches Mikroskop, das einen zentralen Speicher für die Objektive, die in den Objektivrevolver eingesetzt sind, aufweist. Die US 2010/0060777 A1 beschreibt einen Objektivtubus und eine Abbildungsvorrichtung und die DE 10 2005 039 949 A1 beschreibt eine optische Aufzeichnungs- und/oder Wiedergabeeinheit.

Die Erfindung ist im Anspruch 1 definiert. Weiterbildungen sind in den abhängigen Ansprüchen angegeben.

Somit kann das Subsystem recht einfach entwickelt werden. Es kann in Konzentration auf die Benutzung des Aktuators und/oder des Sensors ausgelegt werden. Es ist nicht nötig, eine erweiterte Rechentechnik einzusetzen, die zu höheren Kosten und einer höheren Komplexität führen würde. Man braucht auch keine zusätzliche Kommandostruktur.

Das Mikroskop als Gesamtsystem ist jedoch trotzdem in der Lage, das Subsystem effektiv in komplexen Szenarien einzusetzen.

Erfindungsgemäß kann das Subsystem so ausgebildet sein, dass es zwei Grundfunktionen bereitstellt. Zum einen bietet es eine (sehr grundlegende) Ansteuerung seines Aktuators und/oder seines Sensors an. Bei der Ansteuerung des Aktuators kann es sich um die Bewegung mittels eines Motors und die Einstellung einer Position handeln. Zum anderen bietet das Subsystem eine Speichermöglichkeit.

Bei dem erfindungsgemäßen Mikroskop kann die Vorschrift eine mathematische Vorschrift sein und das Steuermodul eine Recheneinheit aufweisen, die beim Betrieb des Mikroskops ein Ergebnis der mathematischen Vorschrift berechnet und bei der Ansteuerung des Aktuators und/oder des Sensors des Subsystems berücksichtigt.

Ferner kann im Speicher (zumindest) ein erster Parameter, der eine Eigenschaft des Subsystems beschreibt und in der Vorschrift berücksichtigt ist, abgelegt sein, und kann das Steuermodul so ausgebildet sein, dass es beim Betrieb des Mikroskops den ersten Parameter bzw. die ersten Parameter ausliest und bei der Ansteuerung des Aktuators und/oder Sensors des Subsystems gemäß der Vorschrift berücksichtigt.

Ferner kann dem Steuermodul (zumindest) ein zweiter Parameter, der eine Eigenschaft des Mikroskops oder eine beim Betrieb des Mikroskops zu berücksichtigende Eigenschaft aber keine Eigenschaft des Subsystems beschreibt und in der Vorschrift berücksichtigt ist, zugeführt sein, und das Steuermodul kann so ausgebildet sein, dass es beim Betrieb des Mikroskops den zweiten Parameter bzw. die zweiten Parameter bei der Ansteuerung des Aktuators und/oder des Sensors des Subsystems gemäß der Vorschrift berücksichtigt.

Ferner kann die Vorschrift in textueller Form im Speicher des Subsystems abgelegt sein. Insbesondere kann sie als XML-Datei abgelegt sein.

Die textuelle Form kann vom Steuermodul ausgelesen und interpretiert werden. Das Subsystem selbst muss nicht in der Lage sein, diese Interpretation auch durchführen zu können. Man kann somit sagen, dass das Subsystem über seine eigene Rolle im Gesamtsystem nicht Bescheid wissen muss.

Bei dem Subsystem handelt es sich erfindungsgemäß um ein Objektiv des Mikroskops.

Der erste Parameter kann z.B. ein Kalibrierparameter des Objektives sein. Beim zweiter Parameter kann es sich z.B. um die Dicke eines Deckglases, das eine zu untersuchende Probe trägt, oder um die Dicke eines Bodens eines Behälters, in dem sich die Probe befindet, handeln.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:

Fig. 1    eine schematische Ansicht einer Ausführungsform des erfindungsgemäßen Mikroskops;

Fig. 2    eine schematische funktionelle Darstellung zur Erläuterung des Betriebs des erfindungsgemäßen Mikroskops von Fig. 1;

Fig. 3    eine vom Steuermodul 10 des Mikroskops 1 erzeugte Benutzeroberfläche E1;

Fig. 4    ein Ablaufdiagramm zur Erläuterung des Betriebs des Mikroskops, und

Fig. 5    eine Darstellung einer weiteren Benutzeroberfläche E2, die vom Steuermodul 10 erzeugt werden kann.

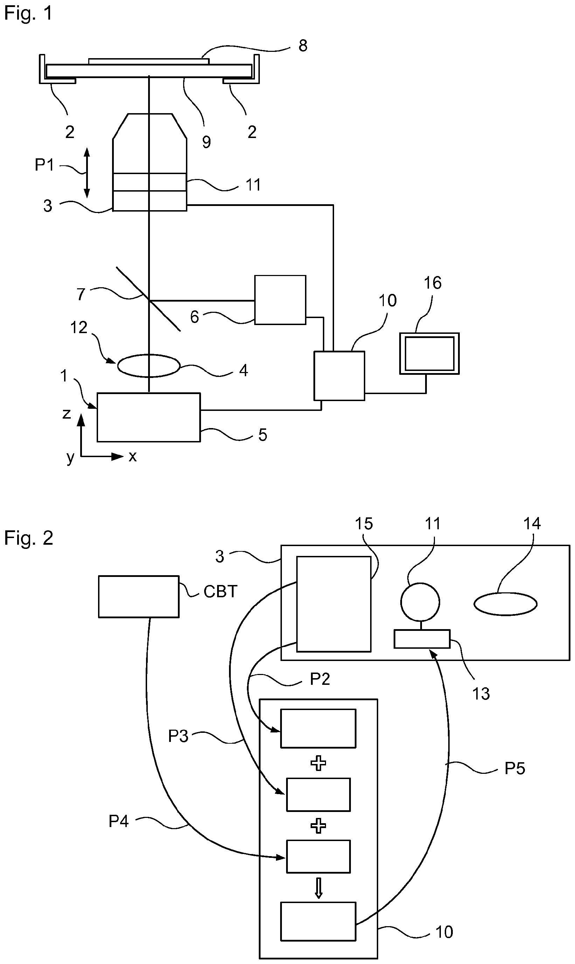

Bei der in Fig. 1 gezeigten Ausführungsform ist die erfindungsgemäße Optikvorrichtung als Mikroskop ausgebildet, das einen Halter 2, ein Objektiv 3, eine erste Teiloptik 4 sowie eine Kamera 5 aufweist. Des Weiteren umfasst das Mikroskop 1 eine erste Lichtquelle 6, deren Beleuchtungslicht über einen zwischen dem Objektiv 3 und der ersten Teiloptik 4 angeordneten teiltransparenten Spiegel 7 in den Abbildungsstrahlengang eingekoppelt und somit über das Objektiv 3 auf eine Probe 8, die im Halter 2 gehaltert ist, gerichtet werden kann. Die Probe 8 kann beispielsweise auf einem Probenträger bzw. Deckglas 9 angeordnet sein, das im Halter 2 gehaltert ist. Zwischen dem Objektiv 3 und dem Deckglas kann ein (nicht gezeigtes) Immersionsmedium (wie z.B. Wasser, Öl oder Glycerin) vorgesehen sein. Alternativ kann das Immersionsmedium auch weggelassen werden. In diesem Fall befindet sich zwischen dem Objektiv 3 und dem Deckglas 9 beispielsweise Luft.

Des Weiteren umfasst das Mikroskop 1 ein Steuermodul 10, das während des Betriebs des Mikroskops zur Steuerung des Mikroskops 1 dient. Das Objektiv 3 weist einen schematisch eingezeichneten Korrekturring 11 auf, der motorgetrieben ist und mittels des Steuermoduls 10 verstellt und eingestellt werden kann.

Die mit dem Licht der Lichtquelle 6 beleuchtete Probe 8 wird in bekannter Weise über das Objektiv 3 und die erste Teiloptik auf die Kamera 5 vergrößert abgebildet. Um eine scharfe Abbildung zu realisieren, kann beispielsweise das Objektiv 3 entlang der z-Richtung bewegt werden, wie durch die Doppelpfeile P1 in Fig. 1 angedeutet ist. Dadurch kann die Fokuslage des Objekts 3 bzw. die entsprechende Abbildung auf die Kamera 5 so in z-Richtung verschoben werden, dass sie mit der abzubildenden Probe 8 zusammenfällt.

Das Objektiv 3 bildet zusammen mit der ersten Teiloptik 4 ein Optikmodul 12 des Mikroskops 1, das das Objektiv 3 als Subsystem aufweist. Bei der hier beschriebenen Ausführungsform umfasst das Objektiv 3, wie in der schematischen Darstellung in Fig. 2 angedeutet ist, neben dem motorbetriebenen Korrekturring 11 eine Steuereinheit 13, die in Reaktion auf eine Anweisung die in der Anweisung enthaltene Position des Korrekturrings 11 einstellt, eine Abbildungsoptik 14, die schematisch als Linse dargestellt ist, und einen Speicher 15, in dem ein interner Parameter abgelegt ist. Der interne Parameter kann, muss aber nicht im Speicher 15 abgelegt sein. Er kann auch anderweitig im Objektiv 3 abgelegt sein. Der interne Parameter kann z.B. ein Kalibrierwert Cal0 sein, der bei der Fertigung des Objektives 3 individuell vermessen und dann im Objektiv 3 hinterlegt wurde.

Im Speicher 15 ist eine Vorschrift (z.B. eine mathematische Formel) hinterlegt, die die Position des Korrekturringes CR0 in Abhängigkeit des Kalibrierwertes Cal0, einer einzugebenden Dicke des Deckglases 9 (Variablenname CBT) sowie einer Abbildungstiefe (Variablenname ID) angibt. Die entsprechende Formel 1 kann beispielsweise wie folgt lauten:

$$CR0 = Cal0 + 136{,}892 \times (CBT - 170) + 140{,}562 \times ID \tag{1}$$

Dieses Konzept ist in Fig. 2 verdeutlicht.

Das Steuermodul 10 liest die im Speicher 15 abgelegte Formel (Pfeil P2) sowie den internen Parameter CR0 (Pfeil P2) aus dem Objektiv 3 aus (hier aus dem Speicher 15) und berechnet dann daraus sowie aus der extern eingegebenen Deckglasdicke CBT (Pfeil P4) die Position CR0 des Korrekturringes 11 und steuert diesen entsprechend an (Pfeil P5), so dass er in die berechnete Position gebracht wird und die gewünschte Korrektur bewirkt.

Somit ist die Beschreibung zur Verstellung des Korrekturrings des Objektes 3 im Objektiv 3 selbst abgelegt (und nicht im Steuermodul 10). Da das Objektiv 3 keine eigene Recheneinheit zur Auswertung der mathematischen Formel aufweist, kann es sie nicht selbst auswerten. Dazu ist das Steuermodul 10 vorgesehen, das beim Betrieb des Mikroskops 1 in der beschriebenen Art und Weise die mathematische Formel ausliest und auswertet. Nachdem das Objektiv 3 nur die grundlegende Ansteuerung des Korrekturrings 11 und mittels der Speicher 15 die Speichermöglichkeit bereitstellt, kann es recht einfach entwickelt werden. Es ist somit nicht nötig, eine erweiterte Rechentechnik im Objektiv 3 einzusetzen, was zu höheren Kosten und zu einer höheren Komplexität führen würde. Insbesondere braucht man keine zusätzliche Kommandostruktur, die notwendig wäre, wenn die Auswertung der Formel im Objektiv 3 selbst durchgeführt werden würde. In diesem Fall müsste dies vom Steuermodul 10 im richtigen Moment während des Betriebes des Mikroskopes angestoßen werden.

Das Steuermodul 10 muss nur so ausgelegt werden, dass es die im Speicher hinterlegte Formel auswerten kann. Beispielsweise kann die Formel in einem textuellen Format (wie z.B. XML) im Objektiv 3 abgelegt sein. Das Steuermodul 10 ist dann so ausgelegt, dass es die Formel sowie die entsprechenden Parameter auslesen, interpretieren und daraus den entsprechenden Einstellwert für den Korrekturring 11 berechnen kann. Dazu kann das Steuermodul 10 die als Text vorliegende Formel mittels eines Parsers in Maschinencode übersetzen und ausführen. Das Ergebnis der Berechnung wird vom Steuermodul 10 direkt als Positionswert benutzt, auf den der Korrekturring 11 verstellt werden muss. Das Objektiv 3 kann eine Firmware zur Ansteuerung des Korrekturrings 11 ("Fahre Position x an") mittels der Steuereinheit 13 aufweisen. Die Firmware liefert auf Anfrage vom Steuermodul 10 einen XML-Text, mit der mathematischen Vorschrift, wie der Korrekturring in Abhängigkeit der äußeren und inneren Parameter zu verstellen ist. Der XML-Text kann beispielsweise wie folgt lauten

```
<?xml version='1.0' encoding-,Windows-1252'?>
 <obj>
 <mode id= 'Glas dünn 23&#x008B;C'>
    <var id='Deckglasdicke' symbol='CBT' unit='&#x00B5;m' min='130' max='210' default='170' />
    <var id='Abbildungstiefe' symbol='ID' unit='&#00B5;m' min='0' max= '50' default='0' />
    <calc symbol='CRO'>Cal0 + 136.892*(CBT-170) + 140.562*ID</calc>
    <calc symbol='WD'>1698.51 - 0.20061*(CBT-170) - 0.29045*ID</calc>
 </mode>
 </obj>
```

Dieser XML-Text gibt an, dass das Objektiv 3 in einem Modus "Glas dünn 23°C" gesteuert werden kann. Hierbei gibt es die äußeren Parameter "Deckglasdicke" (Variablenname CBT) mit möglichen Werten im Bereich von 130 - 210 $\mu$m und "Abbildungstiefe" (Variablenname ID) mit möglichen Werten im Bereich von 0 $\mu$m bis 50 $\mu$m. Ein äußerer Parameter ist ein Parameter, dessen Wert nicht im Objektiv 3 abgelegt ist. Der Wert des äußeren Parameters muss somit von außerhalb des Objektives 3 kommen.

Die Verstellung des Korrekturrings CR0 berechnet sich durch die oben angegebene Formel 1. Mit der weiteren Formel 2 kann auch noch die Änderung des Arbeitsabstandes WD durch die Verstellung wie folgt berechnet werden.

$$WD = 1698,51 - 0,20061 \text{ x } (CBT - 170) - 0,290045 \text{ x } ID \qquad (2)$$

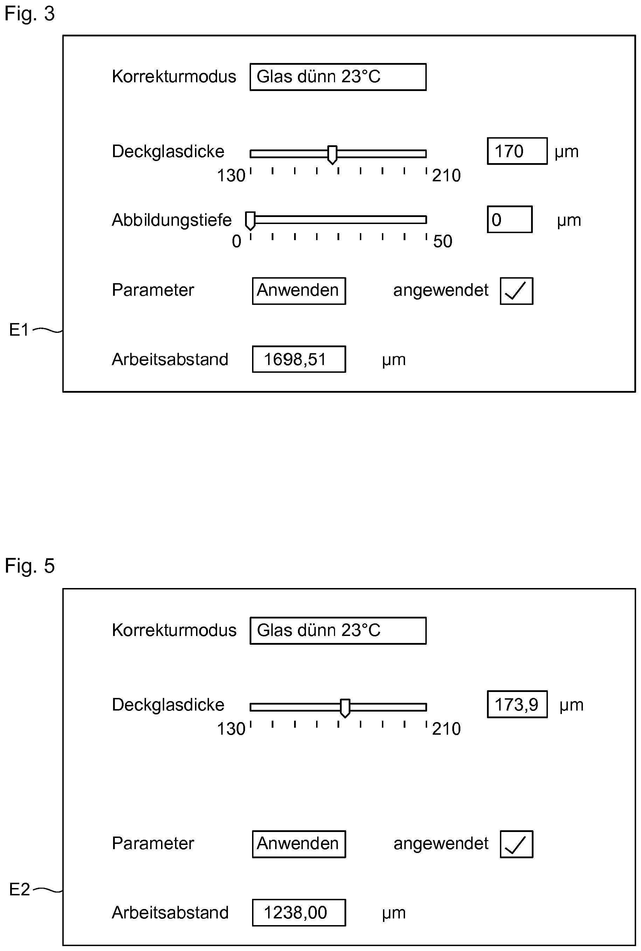

Das Steuermodul 10 bzw. die darauf laufende Software liest diesen XML-Text und den Kalibrierwert Cal0 aus der Objektivfirmware aus, interpretiert diesen und ist damit in der Lage z.B. die in Fig. 3 gezeigte Benutzeroberfläche E1 zur Ansteuerung des Objektives 3 über einen Bildschirm 16 (Fig. 1) auszugeben.

Die Werte der äußeren Parameter "Deckglasdicke" und "Abbildungstiefe" können hier mit den schematisch dargestellten Schiebereglern eingestellt werden. Der eingestellte Wert ist jeweils in der rechts daneben angeordneten Box gezeigt. Wenn die Schaltfläche "anwenden" neben dem Text "Parameter" ausgewählt wird, werden die eingestellten Werte für Deckglasdicke und Abbildungstiefe in die Formel 1 eingesetzt und der Korrekturring 11 per Befehl an die Objektivfirmware auf den ermittelten Wert eingestellt. Des Weiteren werden die eingestellten Werte in der Formel 2 angewendet und das Ergebnis wird in der Box neben dem Text "Arbeitsabstand" angezeigt. Nach Auswählen der Schaltfläche "anwenden" wird dies durch einen Haken in der Box neben dem Text "angewendet" dargestellt.

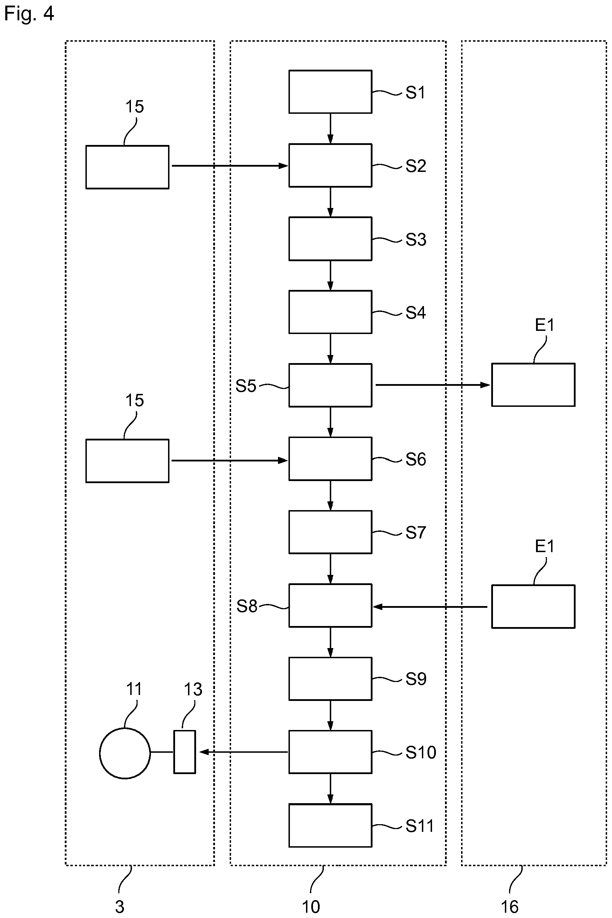

Der Ablauf soll in Verbindung mit dem Ablaufdiagramm von Fig. 4 nochmals im Detail beschrieben werden.

Im Schritt S1 wird das entsprechende Programm im Steuermodul 10 gestartet. Im Schritt S2 wird die XML-Datei aus dem Objektiv 3 ausgelesen. Im Schritt S3 wird überprüft, ob ein XML-Text für CR0 enthalten ist oder nicht. Wenn dies nicht der Fall ist, endet das Programm, ansonsten geht es mit Schritt S4 weiter. Es werden im Schritt S4 die Namen- und Wertebereiche der Variablen aus dem XML-Text für CR0 ausgelesen. Im Schritt S5 wird die Eingabeschnittstelle erzeugt und dargestellt (E1). Im Schritt S6 wird der Kalibrierwert Cal0 aus dem Speicher 15 ausgelesen. Im Schritt S7 wird die Formel für CR0 geparst. Im Schritt S8 werden die über die Benutzerschnittstelle E1 eingestellten Werte für die Deckglasdicke und Abbildungstiefe geholt und damit im Schritt S9 die Stellung für den Korrekturring 11 berechnet. Im Schritt S10 wird der Motor des Korrekturrings 11 des Objekts 3 auf den berechneten Wert gesetzt und mit Schritt S11 endet der Ablauf.

Das Objektiv 3 ist austauschbar im Mikroskop 1 vorgesehen. So kann ein weiteres Objektiv 3 eingesetzt werden, das zwar dieselbe Firmware wie das bereits beschriebene Objektiv 3 aufweist. Jedoch unterscheidet es sich in der mathematischen Vorschrift und den exemplarspezifischen Kalibrierwerten. Bei diesem Objektiv hat nur die Deckglasdicke Einfluss auf die Korrekturringverstellung. Dafür sind aber zwei Korrekturringe (CR0 und CR1) einzustellen. Der entsprechende XML-Text ist nachfolgend angegeben.

```
<?xml version= '1.0' encoding='Windows-1252'?>
<obj>
 <mode id='Glas dünn 238&#x00B0;C'>"
  <var id='Deckglasdicke' symbol='CBT' unit='&#00B5;m' min='130' max='210' default='170' />
  <calc symbol='CR0'>Cal0 - 905455796e-12*CBT^4 + 662348212e-9*CBT^3 - 178102295e-
  6*CBT^2 + 21129542e-3*CBT - 942737</calc>
  <cal symbol='CR1'>Cal1 + 24028955e-15*CBT^5 + 260876589e-12*CBT^4 - 229321295e-9*CBT^3
  + 68903597e-6*CBT^2 - 9138458e-3*CBT + 467581 </calc>
  <calc symbol='WD'>12236850.26 + 11766.11462*CBT + 83.300329511*CBT^1.5 +
  0.19835205355*CBT^2.5 - 12229113.1*Exp(CBT/1000)</calc>
 </mode>
</obj>
```

Das Steuermodul 10 kann basierend auf diesem XML-Text die in Fig. 5 gezeigte Benutzeroberfläche E2 anzeigen. Dazu ist in dem Steuermodul 10 keinerlei Änderung notwendig. Dies erfolgt mit der identischen Software, die auch die Bedienoberfläche gemäß Fig. 3 erzeugt hat.

Durch Auswählen der Schaltfläche "anwenden" neben dem Text "Parameter" wird der eingestellte Wert für die Deckglasdicke in die entsprechenden Formeln eingesetzt. Die entsprechenden Werte werden an die Objektivfirmware gegeben, damit diese die Korrekturringe CR0 und CR1 auf diese Werte einstellt.

## Patentansprüche

1.　Mikroskop mit einem Optikmodul (12), das mindestens ein optisches Element (4, 14) aufweist, und

einem Steuermodul (10) zur Steuerung des Mikroskops,
wobei das Optikmodul (12) ein Subsystem (3), das als Objektiv (3) des Mikroskops ausgebildet ist und einen Speicher (15) sowie einen Aktuator (11) und/oder einen Sensor umfasst, aufweist,
wobei im Speicher (15) eine Vorschrift zur Einstellung des Aktuators (11) und/oder des Sensors des Subsystems (3) abgelegt ist,
wobei das Steuermodul (10) so ausgebildet ist, dass es beim Betrieb des Mikroskops die Vorschrift aus dem Speicher (15) des Subsystems (3) ausliest und den Aktuator (11) und/oder den Sensor des Subsystems (13) gemäß der Vorschrift ansteuert,
wobei das Subsystem (3) austauschbar im Mikroskop vorgesehen und so ausgebildet ist, dass es die in seinem Speicher (15) abgelegte Vorschrift selbst nicht ausführen kann.

2.　Mikroskop nach Anspruch 1, wobei die Vorschrift eine mathematische Vorschrift ist und das Steuermodul (10) eine Recheneinheit aufweist, die beim Betrieb des Mikroskops ein Ergebnis der mathematischen Vorschrift berechnet und bei der Ansteuerung des Aktuators (11) und/oder des Sensors des Subsystems (3) berücksichtigt.

3.　Mikroskop nach Anspruch 1 oder 2, wobei im Speicher (15) ein erster Parameter, der eine Eigenschaft des Subsystems (3) beschreibt und in der Vorschrift berücksichtigt ist, abgelegt ist, und das Steuermodul (10) so ausgebildet ist, dass es beim Betrieb des Mikroskops den ersten Parameter ausliest und bei der Ansteuerung des Aktuators (11) und/oder des Sensors des Subsystems (3) gemäß der Vorschrift berücksichtigt.

4.　Mikroskop nach einem der obigen Ansprüche, wobei dem Steuermodul (10) ein zweiter Parameter, der eine Eigenschaft des Mikroskops oder eine beim Betrieb des Mikroskops zu berücksichtigende Eigenschaft aber keine Eigenschaft des Subsystems (3) beschreibt und in der Vorschrift berücksichtigt ist, zugeführt ist, und das Steuermodul (10) so ausgebildet ist, dass es beim Betrieb des Mikroskops den zweiten Parameter bei der Ansteuerung des Aktuators (11) und/oder des Sensors des Subsystems gemäß der Vorschrift berücksichtigt.

5.　Mikroskop nach einem der obigen Ansprüche, bei der die Vorschrift in textueller Form im Speicher (15) des Subsystems (3) abgelegt ist.

**Claims**

1. Microscope having an optics module (12), which has at least one optical element (4, 14), and

   having a control module (10) for controlling the microscope,
   wherein the optics module (12) has a subsystem (3) that is designed as an objective (3) of the microscope and comprises a memory (15) and an actuator (11) and/or a sensor,
   wherein a rule for setting the actuator (11) and/or the sensor of the subsystem (3) is stored in the memory (15),
   wherein the control module (10) is designed such that, during the operation of the microscope, it reads the rule from the memory (15) of the subsystem (3) and controls the actuator (11) and/or the sensor of the subsystem (13) in accordance with the rule,
   wherein the subsystem (3) is provided in the microscope so as to be interchangeable and is designed such that it cannot execute the rule stored in its memory (15) itself.

2. Microscope according to Claim 1, wherein the rule is a mathematical rule and the control module (10) has a computation unit that, during the operation of the microscope, computes a result of the mathematical rule and takes it into account for controlling the actuator (11) and/or the sensor of the subsystem (3).

3. Microscope according to Claim 1 or 2, wherein a first parameter, which describes a property of the subsystem (3) and has been taken into account in the rule, is stored in the memory (15), and the control module (10) is designed such that, during the operation of the microscope, it reads the first parameter and takes it into account for controlling the actuator (11) and/or the sensor of the subsystem (3) in accordance with the rule.

4. Microscope according to one of the above claims, wherein a second parameter, which describes a property of the microscope or a property to be taken into account during the operation of the microscope but not a property of the subsystem (3) and which has been taken into account in the rule, is fed to the control module (10), and the control module (10) is designed such that, during the operation of the microscope, it takes into account the second parameter for controlling the actuator (11) and/or the sensor of the subsystem in accordance with the rule.

5. Microscope according to one of the above claims, in which the rule is stored in text form in the memory (15) of the subsystem (3).


**Revendications**

1. Microscope comprenant un module optique (12), lequel possède au moins un élément optique (4, 14), et

   un module de commande (10) destiné à commander le microscope,
   le module optique (12) possédant un sous-système (3), lequel est configuré en tant qu'objectif (3) du microscope et comporte une mémoire (15) ainsi qu'un actionneur (11) et/ou un capteur,
   une règle servant au réglage de l'actionneur (11) et/ou au capteur du sous-système (3) étant stockée dans la mémoire (15),
   le module de commande (10) étant configuré de telle sorte que lors du fonctionnement du microscope, il lit la règle depuis la mémoire (15) du sous-système (3) et commande l'actionneur (11) et/ou le capteur du sous-système (13) conformément à la règle,
   le sous-système (3) étant conçu remplaçable dans le microscope et étant configuré de telle sorte qu'il ne peut pas exécuter lui-même une règle stockée dans sa mémoire (15).

2. Microscope selon la revendication 1, la règle étant une règle mathématique et le module de commande (10) possédant une unité de calcul qui, lors du fonctionnement du microscope, calcule un résultat de la règle mathématique et la prend en considération lors de la commande de l'actionneur (11) et/ou du capteur du sous-système (3).

3. Microscope selon la revendication 1 ou 2, un premier paramètre, qui décrit une propriété du sous-système (3) et qui est pris en considération dans la règle, étant stocké dans la mémoire (15), et le module de commande (10) étant configuré de telle sorte que lors du fonctionnement du microscope, il lit le premier paramètre et le prend en considération lors de la commande de l'actionneur (11) et/ou du capteur du sous-système (3) conformément à la règle.

4. Microscope selon l'une des revendications précédentes, un deuxième paramètre, lequel décrit une propriété du microscope à prendre en considération lors du fonctionnement du microscope, mais par une propriété du sous-système (3), et qui est pris en considération dans la règle, étant acheminé au module de commande (10), et le module de commande (10) étant configuré de telle sorte que lors du fonctionnement du microscope, il prend en considération le deuxième paramètre lors de la commande de l'actionneur (11) et/ou du capteur du sous-système conformément à la règle.

5. Microscope selon l'une des revendications précédentes, la règle étant stockée sous forme textuelle dans la mémoire (15) du sous-système (3).

Fig. 1

Fig. 2

Fig. 3

Korrekturmodus | Glas dünn 23°C |

Deckglasdicke  ⊢———————⬦———————⊣  | 170 | µm
130 ' ' ' ' ' ' ' '210

Abbildungstiefe  ⬦——————————————⊣  | 0 | µm
0 ' ' ' ' ' ' ' '50

Parameter | Anwenden |   angewendet ☑

E1

Arbeitsabstand | 1698,51 |   µm

Fig. 5

Korrekturmodus | Glas dünn 23°C |

Deckglasdicke  ⊢—————————⬦—————⊣  | 173,9 | µm
130 ' ' ' ' ' ' ' '210

Parameter | Anwenden |   angewendet ☑

E2

Arbeitsabstand | 1238,00 |   µm

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10349419 A1
- DE 10249177 A1
- DE 19839777 A1
- US 20100060777 A1
- DE 102005039949 A1